## Europäisches Patentamt

## European Patent Office

## Office européen des brevets

(19)

(11) Veröffentlichungsnummer: **0 155 466**
**B1**

(12)

# EUROPÄISCHE PATENTSCHRIFT

(45) Veröffentlichungstag der Patentschrift: **19.09.90**

(51) Int. Cl.$^5$: **B 01 D 33/044**, B 01 D 33/70

(21) Anmeldenummer: **85100869.8**

(22) Anmeldetag: **29.01.85**

(54) **Filtervorrichtung zum Abscheiden von Feststoffen aus Flüssigkeiten.**

(30) Priorität: **17.03.84 DE 3409826**

(43) Veröffentlichungstag der Anmeldung:
**25.09.85 Patentblatt 85/39**

(45) Bekanntmachung des Hinweises auf die
Patenterteilung:
**19.09.90 Patentblatt 90/38**

(84) Benannte Vertragsstaaten:
**AT BE CH DE FR GB IT LI NL SE**

(56) Entgegenhaltungen:
**WO-A-84/00311**
**AU-B- 547 320**
**DE-A-2 234 743**
**DE-A-2 725 645**
**DE-U-7 218 709**
**FR-A-2 390 191**

**PATENT ABSTRACTS OF JAPAN, Band 9, Nr. 17,**
**24.01.1985,(C-262)(1740)**

(73) Patentinhaber: **Reber, Hans**
**Wartburgstrasse 5**
**D-7410 Reutlingen (DE)**

(72) Erfinder: **Reber, Hans**
**Wartburgstrasse 5**
**D-7410 Reutlingen (DE)**

(74) Vertreter: **Kinkelin, Ulrich, Dipl.-Ing.**
**Weimarer Strasse 32/34 Auf dem Goldberg**
**D-7032 Sindelfingen (DE)**

Courier Press, Leamington Spa, England.

## Beschreibung

Die Erfindung betrifft eine Filtervorrichtung gemäß dem Oberbegriff des Anspruchs 1.

Eine Filtervorrichtung dieser Art ist in der DE—B—1 056 589 beschrieben. Die Zufuhr der Schmutzflüssigkeit erfolgt hierbei über eine Vorfilterwanne, die in den Filtrierbereich gehängt wird, wobei sie gröberen Schmutz zurückhält. Dieser Grobschmutz wird mittels eines Kratzerförderers aus der Vorfilterwanne abtransportiert. Im Filtrierbereich, der die Gestalt eines Zylinderabschnitts hat, setzt sich der Schmutz am Filterband ab und bildet einen sogenannten Filterkuchen, der seinerseits auch eine Filterwirkung hat. Aufgrund der Schwerkraft dringt die Flüssigkeit durch das Filterband und den anwachsenden Filterkuchen. Mit zunehmender Höhe des Filterkuchens reduziert sich die Durchdringgeschwindigkeit der Flüssigkeit, so daß bei gleicher Zuflußrate der Flüssigkeitsspiegel im Filtrierbereich ansteigt. Erreicht der Flüssigkeitsspiegel ein Grenzniveau, was über einen Schwimmerschalter überwacht wird, treibt ein Motor das Gitterstützband um eine kurze Strecke an, wodurch frisches unbelegtes Filterband zur Bildung des Filtrierbereichs herangezogen wird und auf der anderen Seite ein Teil des mit dem Filterkuchen belegten Filterbandes in einen Schmutzbehälter befördert wird. Es stellt sich somit ein Gleichgewichtszustand zwischen unterschiedlich hohen Ablagerungen des Filterkuchens im Filtrierbereich ein, so daß das Flüssigkeitsniveau etwa auf dem Grenzniveau gehalten wird.

Bei den bekannten gattungsgemäßen Filtervorrichtungen, solche sind noch in der US—A—4 110 218 oder einem 1982 erschienenen Prospekt der Firma Barnes Drill (USA) beschrieben bzw. dargestellt, wird das Grenzniveau der Flüssigkeit im Filtrierbereich auf ein Viertel des Durchmessers der seitlichen Scheiben eingestellt. Damit ist aber die Effektivität der Filtervorrichtung begrenzt.

Filtervorrichtungen gattungsähnlicher Art sind in der DE—U—7 218 709, DE—A—2 234 743 und DE—A—2 725 645 beschrieben. Bei diesen erfolgt die Rückführung des Gitterstützbandes unterhalb einer Auffangwanne für die gereinigte Flüssigkeit, was zu erhöhtem Flüssigkeitsverlust führt und damit die Filtereffektivität reduziert. Im Fall der DE—U—7 218 709 wird die Schmutzflüssigkeit über die als Hohlwelle ausgebildete Achse zugeführt, wodurch ein Aufwirbeln bereits abgesetzten Schmutzes vermieden wird. Bei allen diesen Filtervorrichtungen kann das Grenzniveau der Flüssigkeit im Filtrierbereich ebenfalls prinzipbedingt nur ein Viertel des Scheibendurchmessers erreichen. Bei höherem Niveau wäre nämlich der Böschungswinkel des aus der Flüssigkeit austretenden Filterbandes so steil, daß sich dort der Filterkuchen vom Filterband lösen und in die Flüssigkeit zurückstürzen würde. Eine Filtervorrichtung, die immer nur erneut denselben Schmutz ausfiltert, der schon zuvor am Filterband abgelagert war, ist aber unbrauchbar. Insofern beruht der in den beiden DE—A's gezeichnete höhere Flüssigkeitsspiegel auf einer Fehlannahme des Zeichners.

Eine weitere gattungsähnliche Filtervorrichtung ist in der JP—A—49—85668 beschrieben. Auch hier erfolgt die Rückführung des Gitterstützbandes unterhalb der Auffangwanne. Die Seitenscheiben sind drehstarr mit der Achse verbunden, an deren Zentrum nach Art eines Schaufelrades mehrere Paddel drehstarr befestigt sind, die im Zuge der Achsdrehung jeweils dicht an das Filterband heranreichen. Diese Paddel reichen nicht bis zu den Seitenscheiben, sondern es bleibt ein seitlicher Abstand bestehen.

In diesen seitlichen Spalt mündet die radiale Zufuhrleitung. Über die seitlich freien Ränder der Paddel entsteht eine Ablaufströmung, wenn ein Paddel aus der Flüssigkeit hochtaucht, so daß dadurch ein Großteil des abgelagerten Filterkuchens zurückgespült wird. Außerdem bewirkt die seitliche Zufuhr der Schmutzflüssigkeit eine Kreisströmung um die Paddel, so daß auch dadurch Teile des Filterkuchens wieder weggespült werden. Die Paddel senken also eher die Filterkapazität als daß sie nützen würden.

Aufgabe der Erfindung ist es, eine Filtervorrichtung der gattungsgemäßen Art zu schaffen, deren Filtereffektivität weiter verbessert ist.

Diese Aufgabe wird durch die kennzeichnenden Merkmale des Anspruchs 1 gelöst.

Zufolge der Schmutzmitnehmerstege und der ein Aufwirbeln des Filterkuchens vermeidenden Zufuhr der Schmutzflüssigkeit über die Hohlwelle ist es nunmehr möglich, das Flüssigkeitsniveau bedeutend zu heben, da ein Rückstürzen von Teilen des Filterkuchens weitgehend verhindert wird. Die Effektivitätssteigerung resultiert einerseits aus der Vergrößerung der wirksamen Filterfläche, da jetzt Bereiche des Filterbandes genutzt werden, die sich bisher oberhalb des niedrig liegenden Flüssigkeitsspiegels befanden, und andererseits aus dem erheblich höheren Flüssigkeitsdrucks zufolge des gestiegenen Grenzniveaus.

Die Erfindung wird nachfolgend anhand in der Zeichnung schematisch dargestellter Ausführungsbeispiele näher erläutert.

Im einzelnen zeigen:

Fig. 1 eine schematische Seitenansicht der Filtervorrichtung;

Fig. 2 einen schematischen Querschnitt durch die Vorrichtung entlang der Linie II—II in Fig. 1;

Fig. 3 einen der Fig. 2 entsprechenden schematischen Querschnitt durch ein abgewandeltes Ausführungsbeispiel der Filtervorrichtung.

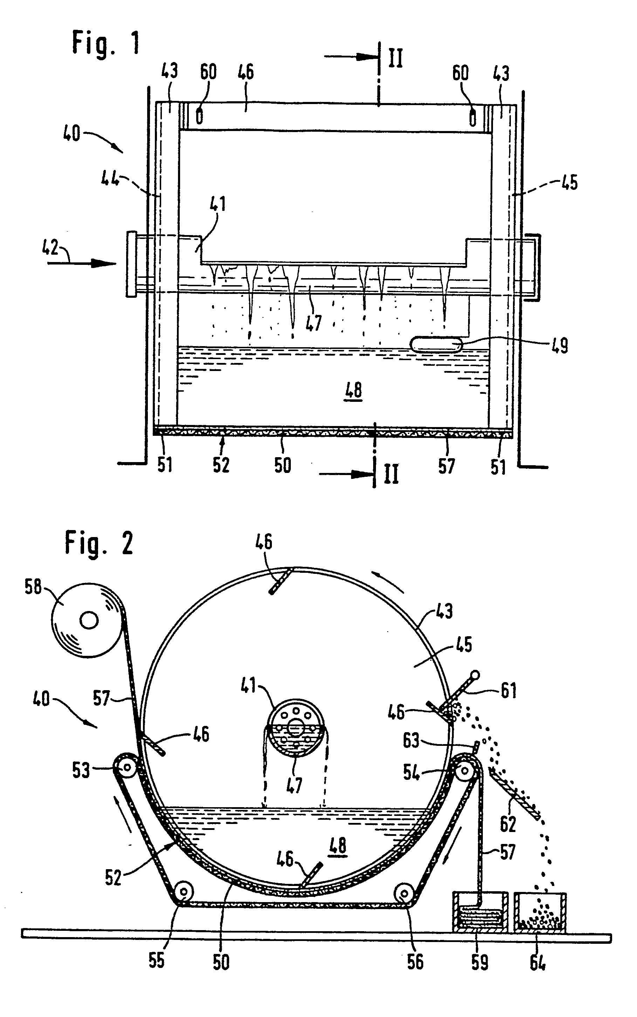

Die in der Zeichnung dargestellte Filtervorrichtung 40 weist eine Hohlachse 41 auf, über welche in Richtung des in Fig. 1 eingetragenen Pfeiles 42 die zu reinigende Flüssigkeit der Vorrichtung zugeführt wird. Auf der Hohlachse 41 sind mit Abstand zwei mit einem Außenflansch 43 versehene Scheiben 44 und 45 drehbar gelagert, zwischen denen sich mehrere Schmutzmitnehmerstege 46 erstrecken. Die Hohlachse 41 ist in dem Bereich zwischen den beiden Scheiben 44 und 45 durch Entfernung eines Teiles ihrer Wandung zu einer Rinne 47 ausgebildet, über deren Rand die zugeführte Schmutzflüssigkeit in den darunter befindlichen Flüssigkeitseingabebereich 48 ausfließt. Dieser wannenförmige Flüssigkeitseingabebereich 48, in welchem der Schwimmer 49 eines steuernden Schwimmerschalters angeordnet ist, ist an den beiden Enden durch die Scheiben 44 und 45 und nach unten durch ein mit seinen Längsrändern 51 an den Flanschen 43 der beiden Scheiben 44 und 45 sich abstützendes Trum 50 eines endlosen Gitterstützbandes begrenzt. Dieses endlose Gitterstützband 52 ist über zwei etwas unterhalb der durch die Hohlachse 41 bestimmten Mittelebene der Vorrichtung angeordnete obere Umlenkrollen 53 und 54 und über untere Umlenkrollen 55 und 56 geführt. Mindestens eine der Umlenkrollen 53—56 ist angetrieben.

Auf dem Trum 50 des Gitterstützbandes 52 liegt ein vom Gitterstützband mitbewegtes Filterband 57 auf, das von einer Vorratsrolle 58 abgezogen wird und hinter der oberen Umlenkrolle 54 in einen Sammelbehälter 59 abgeleitet wird. Das Filterband 57 und das ihm zugeordnete Gitterstützband erstrecken sich über einen Umfangsbereich von mindestens 120° der den Filtrierbereich seitlich begrenzenden Scheiben 44 und 45 und bilden über diesen ganzen Winkelbereich eine Filtrierfläche, über welcher die zu reinigende Flüssigkeit im wannenförmigen Flüssigkeitseingabebereich 48 mit einem relativ hohen Flüssigkeitspegel steht. Das endlose Gitterstützband wird von der oberen Umlenkrolle 54 durch den unterhalb des Trumes 50 befindlichen Ablaufbereich der gefilterten Flüssigkeit zur oberen Umlenkstelle 53 zurückgeführt.

Die Schmutzmitnehmerstege 46 sind mit ihren Enden an den Scheiben 44 und 45 in Radialrichtung begrenzt beweglich gelagert, was in Fig. 1 durch Langlöcher 60 an den Befestigungsstellen angedeutet ist. Dadurch können sich die Schmutzmitnehmerstege im Filtrierbereich unter ihrem Eigengewicht gegen die Filterbahn 57 anlegen und vom in Richtung auf die obere Umlenkwalze 54 ansteigenden Filterband 57 abrutschende Feststoffteilchen erfassen, die dann oberhalb der Umlenkrolle 54 von einem Abstreifer 61 auf eine Rutsche 62 abgeworfen werden. Oberhalb der oberen Umlenkrolle 54 ist außerdem eine Rakel 63 angeordnet, mit welcher Schmutzanhäufungen vom Filterband 57 abgehoben und ebenfalls über die Rutsche 62 in einen gesonderten Schmutzbehälter 64 abgeleitet werden.

Zur Erhöhung der Durchsatzmenge an Flüssigkeit im Filtrierbereich kann der unterhalb des Trumes 50 des Gitterstützbandes befindliche Flüssigkeitsablaufbereich, durch welchen das Gitterstützband zurückgeführt ist, unter Unterdruck gesetzt werden.

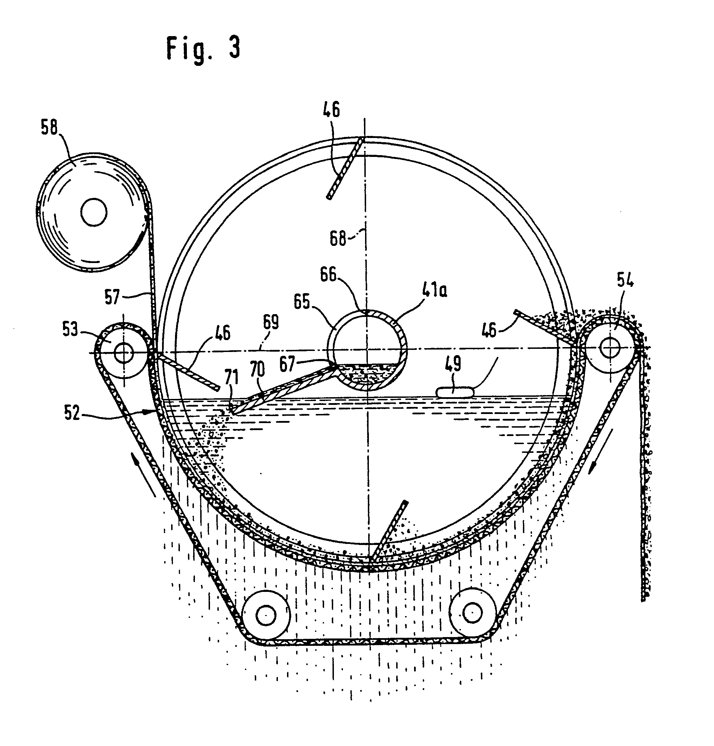

Fig. 3 zeigt eine abgewandelte Ausführungsform der Filtervorrichtung. Bei dieser Ausführungsform ist die Hohlachse 41a auf ihrer der Einlaufseite des Filterbandes 57 zugekehrten Seite mit einer längsschlitzartigen Auslauföffnung 65 versehen, deren oberer Längsrand 66 in der durch eine strichpunktierte Linie 68 angedeuteten vertikalen Mittelebene der Hohlachse verläuft, während sich ihr unterer Längsrand 67 achsparallel unterhalb der durch eine strichpunktierte Linie 69 angezeigten horizontalen Mittelebene der Hohlachse 41a erstreckt. An den unteren Längsrand 67 schließt sich eine schräg nach außen abfallende Abströmwandung 70 an, die mit Abstand von der Laufbahn des Filterbandes 57 und des Gitterstützbandes 52 endet und über welche die über die Hohlachse 41a zugeführte Schmutzflüssigkeit bis in den Anfangsbereich des Filterbandes 57 geleitet wird. Der freie Außenrand 71 der Abströmwandung 70 ist so gelegt, daß die Schmutzmitnehmerstege 46 nicht an der Abströmwandung 70 anschlagen.

**Patentansprüche**

1. Filtervorrichtung zum Abscheiden von Feststoffen aus Flüssigkeiten mit einem Filterband (57), das im Filtrierbereich an einem über Umlenkrollen (53, 54, 55, 56) geführten angetriebenen, endlosen Gitterstützband (52) anliegt und auf einer Kreisbogenbahn über einen Winkel von mindestens 120 Grad geführt ist, wobei beide Außenränder (51) des das Filterband (57) tragenden Trums (50) des Gitterstützbandes (52) im Filtrierbereich an Umfangsflanschen (43) von den Flüssigkeitseingabebereich (48) seitlich begrenzenden Scheiben (44, 45) anliegen, die auf einer gemeinsamen Achse (41) gelagert sind, und wobei die Rückführung des endlosen Gitterstützbandes (52) durch den Ablaufbereich der gefilterten Flüssigkeit hindurch erfolgt, dadurch gekennzeichnet, daß die Achse (41) als mit mindestens einer Auslauföffnung (47, 65) versehene Hohlachse ausgebildet ist, über welche die Zufuhr der zu reinigenden Flüssigkeit erfolgt, und sich zwischen den beiden mitumlaufenden Scheiben (44, 45) im Filtrierbereich am Filterband (57) zum Anliegen kommende Schmutzmitnehmerstege (46) erstrecken.

2. Filtervorrichtung nach Anspruch 1, dadurch gekennzeichnet, daß die Schmutzmitnehmerstege (46) an den Scheiben (44, 45) in Radialrichtung begrenzt beweglich gelagert sind.

3. Filtervorrichtung nach einem der Ansprüche 1 oder 2, dadurch gekennzeichnet, daß an einer oberen Umlenkrolle (54) des Gitterstützbandes (52) über dem aufliegenden Filterband (57) eine Schmutzabstreifrakel (63) angeordnet ist.

4. Filtervorrichtung nach einem der Ansprüche 1 bis 3, dadurch gekennzeichnet, daß der Raum unterhalb des das Filterband (57) tragenden Trums (50) des Gitterstützbandes (52) unter Unterdruck haltbar ist.

5. Filtervorrichtung nach einem der Ansprüche 1 bis 4, dadurch gekennzeichnet, daß im Flüssigkeitseingabebereich (48) des Filterbereichs ein die Flüssigkeitshöhe steuernder Schwimmerschalter (49) angeordnet ist.

## Revendications

1. Dispositif de filtrage pour séparer des matières solides de liquides, avec une bande de filtre (57) qui, dans la section de filtrage, s'applique sur une bande de grille d'appui sans fin (52) en mouvement, guidée sur des rouleaux de déviation (53, 54, 55, 56), et est guidée suivant une trajectoire en arc de cercle sur un angle d'au moins 120 degrés, dans lequel les deux rives extérieures (51) du brin (50) de la bande de grille d'appui (52) qui supporte la bande de filtre (57) s'appliquent, dans la section de filtrage, sur des flasques périphériques (43) de disques (44, 45) limitant latéralement la zone (48) d'introduction du liquide, lesquels sont montés sur un axe commun (41), et dans lequel le retour de la bande de grille d'appui sans fin (52) se fait à travers la zone d'évacuation du liquide filtré, caractérisé en ce que l'axe (41) est réalisé sous la forme d'un axe creux pourvu d'au moins une ouverture d'écoulement (47, 65), par laquelle à lieu l'amenée du liquide à épurer, et en ce qu'entre les deux disques tournants (44, 45) s'étendent des palettes (46) d'entraînement de la boue, qui s'appliquent sur la bande de filtre (57) dans la section de filtrage.

2. Dispositif de filtrage suivant la revendication 1, caractérisé en ce que les palettes (46) d'entraînement de la boue sont montées sur les disques (44, 45) avec une mobilité limitée en direction radiale.

3. Dispositif filtrage suivant une des revendications 1 ou 2, caractérisé en ce qu'à un rouleau supérieur (54) de déviation de la bande de grille d'appui (52) est disposé un recloir (53) d'enlèvement de la boue, au-dessus de la bande de filtre appliquée (57).

4. Dispositif de filtrage suivant une des revendications 1 à 3, caractérisé en ce que le volume situé sous le brin (50) de la bande de grille d'appui (52) qui supporte la bande de filtre (57) peut être maintenu sous dépression.

5. Dispositif de filtrage suivant une des revendications 1 à 4, caractérisé en ce que, dans la zone (48) d'introduction du liquide de la section de filtrage, est disposé un interrupteur à flotteur (49) commandant le niveau du liquide.

## Claims

1. Filter device for separating solids from liquids having a filter belt (57), which rests on a continuous screen support belt (52) in the filtering area, said screen support belt (52) being driven guided over deflection rollers (53, 54, 55, 56), and which is guided on an arcuate path over an angle of at least 120°, both outer edges (51) of the strand (50) of the screen support belt (52) bearing the filter belt (57) resting on circumferential flanges (43) of discs (44, 45) laterally bordering the liquid feed area (48) in the filtering area, said discs being mounted on a common shaft (41), and the return of the continuous screen support belt (52) taking place through the outflow area of the filtered liquid, characterized in that the shaft (41) is constructed as a hollow shaft provided with at lesat one outlet opening (47, 65), via which hollow shaft the liquid to be cleaned is fed in, and sludge catch bars (46), which come to rest on the filter belt (57) in the filtering area, extend between the two rotating discs (44, 45).

2. Filter device according to Claim 1, characterized in that the sludge catch bars (46) are mounted on the discs (44, 45) with restricted movement in the radial direction.

3. Filter device according to one of Claims 1 or 2, characterized in that a sludge scraper blade (63) is arranged at an upper deflection roller (54) of the screen support belt (52) above the filter belt (57) lying on the latter.

4. Filter device according to one of Claims 1 to 3, characterized in that the space below the strand (50) of the screen support belt (52) bearing the filter belt (57) can be held at low pressure.

5. Filter device according to one of Claims 1 to 4, characterized in that a float switch (49) controlling the level of liquid is arranged in the liquid feed area (48) of the filter area.

Fig. 1

Fig. 2

# Fig. 3